# EUROPÄISCHE PATENTANMELDUNG

(11) **EP 0 801 888 A1**
(43) Veröffentlichungstag der Anmeldung: **22.10.1997**
(21) Anmeldenummer: 97106552.9
(22) Anmeldetag: 21.04.1997
(51) Int. Cl.: A01D 75/30

(54) **Grossflächen-Mähgerät**

(30) Priorität: 19.04.1996 DE 29607142 U; 17.02.1997 DE 29703094 U
(71) Anmelder: Wiedenmann GmbH, 89192 Rammingen (DE)
(72) Erfinder:
(74) Vertreter: Flügel, Otto, Dipl.-Ing.

(57) **Zusammenfassung**

Großflächen-Mähgerät (1) für den Anbau an einen Traktor (11) mit mehreren Sichelmähblättern (12), die um etwa senkrecht zur zu mähenden Fläche gerichtete Achsen rotierend gemeinsam von dem Traktor aus antreibbar sind. Um bei zentralem Antrieb vom Traktor aus gesteuert an den jeweiligen Raum- und Flächenverhältnissen des zu mähenden Bodens angepaßt arbeiten zu können, ohne daß auch bei Kurvenfahrten innerhalb des Mähbereiches ungemähte Zonen auftreten, zeichnet sich dieses Großflächen-Mähgerät aus durch einen Zentralrahmen (3), der an eine Aufnahmeausbildung des Traktors (11) anbaubar ist und an dessen dem Traktor abgewandter Rahmenbereich (13) eine mittlere Mäheinheit (5) und an dessen seitlichen Rahmenbereichen eine rechte und eine linke Mäheinheit (6, 7) angeschlossen sind, so daß deren Mähbetriebsausrichtungen parallel zueinander und in Fahrtrichtung des Traktors verlaufen, wobei der Zentralrahmen (3) ein Verteilergetriebe (14) mit einem Eingang und drei Ausgängen aufweist, dessen Eingang an eine Zapfwelle des Traktors getrieblich angeschlossen ist und von dessen Ausgängen je einer mit dem Sichelmähblattantrieb (15) eines der drei Mäheinheiten (5, 6, 7) getrieblich in Verbindung steht.

## Beschreibung

Der Erfindung betrifft ein Großflächen-Mähgerät für den Anbau an einen Traktor mit mehreren Sichelmähblättern, die um etwa senkrecht zur zu mähenden Fläche gerichtete Achsen rotierend gemeinsam von dem Traktor aus antreibbar sind.

Unter Großflächen-Mähgeräten werden hier solche verstanden, deren gleichzeitig gemähter Streifen des Mähgutes weit über die Breite des das Mähgerät befördernden Traktors oder dergleichen Arbeitsmaschine hinausgeht. Soweit Sichelmähblätter mit dieser Arbeitsbreite in einer Gehäuseeinheit angeordnet sind, lassen sich Geländehindernisse wie Bäume nur schwierig umfahren, und auch der Transport auf vergleichsweise schmalen Wegen ist umständlich und gefährlich.

Es ist Aufgabe der Erfindung, ein Großflächen-Mähgerät der eingangs genannten Art zur Verfügung zu stellen, das bei zentralem Antrieb vom Traktor aus gesteuert den jeweiligen Raum- und Flächenverhältnissen des zu mähenden Bodens angepaßt arbeitet, ohne daß auch bei Kurvenfahrten innerhalb des Mähbereiches ungemähte Zonen auftreten.

Ausgehend von einem Großflächen-Mähgerät mit den eingangs genannten Merkmalen wird diese Aufgabe gelöst durch einen Zentralrahmen, der an eine Aufnahmeausbildung des Traktors anbaubar ist und an dessen dem Traktor abgewandter Rahmenbereich eine mittlere Mäheinheit und an dessen seitlichen Rahmenbereichen eine rechte und eine linke Mäheinheit angeschlossen sind, so daß deren Mähbetriebsausrichtungen parallel zueinander und in Fahrtrichtung des Traktors verlaufen, wobei der Zentralrahmen ein Verteilergetriebe mit einem Eingang und drei Ausgängen aufweist, dessen Eingang an eine Zapfwelle des Traktors getrieblich angeschlossen ist und von dessen Ausgängen je einer mit dem Sichelmähblattantrieb eines der drei Mäheinheiten getrieblich in Verbindung steht.

Durch die einzelnen Mäheinheiten mit, insbesondere jeweils mehreren, vorzugsweise drei, Sichelmähern wird die Voraussetzung einer kleinflächigeren Anpaßbarkeit an die jeweils überstrichene Mähfläche, dem Ausweichen von Hindernissen und einer in Richtung auf die Traktorbreite platzsparenden Transportsituation geschaffen, ohne den Vorteil eines zentralen Antriebes der Sichelmähblätter und Steuerung der Mäheinheiten aufzugeben. Dazu sind vorzugsweise die drei Mäheinheiten höhenbeweglich an dem Zentralrahmen gehalten und jeweils über Laufräder, vorzugsweise um senkrecht zur Schnittebene der Sichelmähblätter verschwenkbaren Nachlaufräder, an der zu mähenden Fläche abgestützt, so daß jede Mäheinheit für sich einem unebenen Verlauf der zu mähenden Fläche folgen kann. Vorzugsweise sind dabei je Mäheinheit vier Laufräder vorgesehen, die bevorzugt paarweise an spitzwinklig zur Fahrtrichtung verlaufenden Trägern des Mäheinheitgehäuses in dessen Randbereichen gehalten sind. Durch die bevorzugte Ausgestaltung derart, daß die rechte und die linke Mäheinheit jeweils über eine Lenkereinrichtung mit dem Zentralrahmen höhenverstellbar verbunden sind, lassen sich diese Mäheinheiten wahlweise rechts oder links für das Umfahren eines Hindernisses aus ihrer Arbeitslage abgestützt an der zu mähenden Fläche hochverschwenken, vorzugsweise um einen Winkel gleich oder größer 90°, so daß die Breite an dieser Seite etwa derjenigen des Traktors entspricht. Bei Hochverschwenken zugleich der rechten und der linken Mäheinheit erhält man eine entsprechend etwa auf die Breite des Traktors reduzierte Gesamtbreite des Gerätes und damit eine günstige Transportsituation. Für das Verschwenken der rechten und linken Mäheinheit sind vorzugsweise Kolben-Zylinder-Einrichtungen vorgesehen, die einen Endes an dem Zentralrahmen angelenkt sind und anderen Endes an der jeweils zugeordneten Lenkereinrichtung einer der seitlichen Mäheinheiten angreifen, entweder direkt über eine entsprechende Hebelausbildung oder aber über einen Hebel-Tragbalken, der nur im Anhebefall an der Lenkereinrichtung zur Anlage kommt. In jedem Falle ist sichergestellt, daß die seitlichen Mähgeräte in die Arbeitslage abgesenkt freibeweglich den Unebenheiten der Fläche folgen können.

Die Lenkereinrichtungen bestehen dabei insbesondere jeweils aus zwei parallel verlaufend beabstandeten Lenkerarmen, deren einer zu einem Anlenkende hin mit einem abgespreizten Arm gabelförmig ausgebildet und mit diesem abgespreizten Armende demjenigen des anderen Lenkerarms benachbart an der zugehörigen Schwenkachse angelenkt ist. Sämtliche Anlenkstellen der Lenkerarme sind dabei eigenbeweglich gestaltet. Zumindest die Lager der Arme an einer der Schwenkachsen, vorzugsweise diejenige in Übergang zu dem Zentralrahmen, sind dabei als Kugelgelenklager oder dergleichen, in einfachster Ausführung derart spielbehaftet ausgebildet, daß die Lenkarme gegenüber der Schwenkachse senkrecht zu ihrer Längsrichtung pendeln können. Die Lenkeinrichtungen stellen demnach eine starre Mitnahme zwischen Zentralrahmen und Mäheinheit sicher und ermöglichen zugleich Bewegungen der Mäheinheit senkrecht zum Boden in Anpassung an Unebenheiten der zu mähenden Fläche.

An dem Zentralrahmen ist ein Verteilergetriebe üblicher Bauart angeordnet, dessen Eingang mit einer Zapfwelle des Traktors und dessen drei Ausgänge mit den Sichelmähblattantrieben der Mäheinheiten verbunden sind, vorzugsweise über Gelenkwellen. Die Sichelmähblattantriebe beinhalten ein bekanntes Umlenkgetriebe, beispielsweise mittels Kegelzahnrädern, und arbeiten auf ein Riemengetriebe, das die zugeordneten Sichelmähblätter mit dem Ausgang des Umlenkgetriebes verbindet und in bekannter Weise zu diesem Zwecke Umlenkungen und/oder Riemenspannrollen umfaßt.

In Ausbildung des Mähgerätes für den Frontanbau an den Traktor ist der Zentralrahmen an die Drei-Punkt-Aufnahmeausbildung im Frontbereich des Traktors anschließbar und von diesem zwischen einer Betriebslage und einer Transportlage höhenversetzbar getragen ist und daß die Sichelmähblattantriebe in Mährichtung, d.h. Vorwärtsfahrtrichtung des Traktors, jeweils im Frontbereich der zugehörigen Mäheinheiten vor den Rotationsachsen der Sichelmähblätter, vorzugsweise vor den peripher äußeren Umlaufbahnen der seitlich angeordneten Sichelmähblätter, angeordnet sind, wobei die Gelenkwellenverbindungen zwischen dem Verteilergetriebe und den Sichelmähblattantrieben der rechten und der linken Mäheinheit jeweils in Aufeinanderfolge aus einer von dem Verteilergetriebe ausgehenden Verbindungswelle und einer von dem Zentralrahmen zu den Sichelmähblattantrieben führenden Gelenkwelle bestehen. Dadurch wird es möglich, daß die rechte und die linke Mäheinheit in die Bereiche seitlich der Vorderräder des Traktors hineinragend angeordnet sind und vorzugsweise die mittlere Mäheinheit hinsichtlich ihres Mähbereiches senkrecht zur Mäh- bzw. Vorwärtsfahrtrichtung breiter ist, d.h. Sichelmähblätter mit größerem Durchmesser aufweist, als die rechte und die linke Mäheinheit.

Der Frontanschluß dieses Großflächen-Mähgerätes zeichnet sich dadurch aus, daß der Anbau sehr eng an die Frontpartie des Traktors ausgestaltet ist und zwar derart, daß die seitlichen Mäheinheiten dicht in die Bereiche neben den Vorderrädern anzuordnen sind. Auch bei engen Kurvenfahrten verbleibt zwischen den Sichelmähblättern, bei Linksfahrt also beispielsweise zwischen dem mittleren vorderen und der linken Mäheinheit, kein ungemähtes Rasensegment stehen. Daraus folgt als Eigenart dieses Gerätes, daß im Sinne einer nicht zu knapp bemessenen Länge der Gelenkwellen die Sichelmähblattantriebe für diese seitlichen Mäheinheiten wie auch für die mittlere Mäheinheit in deren Frontbereich angeordnet sind und die Antriebsbewegung für die Sichelmähblätter von vorne her einleiten. Der an die höhenversetzbare Drei-Punkt-Aufnahmeausbildung im Frontbereich des Traktors angeschlossene Zentralrahmen ist verhältnismäßig klein zu bemessen und kann zur Gänze von dieser Drei-Punkt-Aufnahmeausbildung auch in der Arbeitsstellung der Mäheinheiten getragen sein. Dafür spricht auch die bei Frontanbau gegebene Gewichtsverteilung. In anderer Ausführung kann der Tragrahmen Stützräder aufweisen, so daß die Drei-Punkt-Aufnahmeausbildung des Traktors in der Betriebslage schwimmend einstellbar ist.

Bei Ausbildung des Großflächen-Mähgerätes für den Heckanbau an den Traktor ist der Zentralrahmen an die Drei-Punkt-Aufnahmeausbildung im Heckbereich des Traktors anschließbar und von diesem zwischen einer Transportlage getragen und in eine Betriebslage absetzbar ist, in welch letzterer der Zentralrahmen mittels wenigstens einem, vorzugsweise zwei, um eine senkrechte Schwenklagerung drehbaren Nachlaufstützrad an der zu mähenden Fläche abgestützt ist, und daß der Zentralrahmen in seinem dem Traktor abgewandten Rahmenbereich eine Drei-Punkt-Anlenkausbildung aufweist, an der die mittlere Mäheinheit senkrecht zur Zu mähenden Fläche gelenkig versetzbar angeschlossen und, vorzugsweise über nur zugbelastbare Verbindungen, beispielsweise Ketten, in die Transportlage anhebbar angeschlossen ist, so daß bei Anheben des Zentralrahmens durch Hochfahren der Drei-Punkt-Aufnahmeausbildung des Traktors die mittlere Mäheinheit über die Drei-Punkt-Anlenkung und die nur zugbelastbaren Verbindungen mit angehoben wird.

In weiterhin bevorzugter Ausgestaltung ist in den Getriebe-Antriebszug zumindest der rechten und der linken Mäheinheit jeweils eine im Überführungsfall von der Betriebs- in die Transportlage trennende Kupplung, insbesondere in Folgeschaltung mit einer auf den Sichelmähblattantrieb wirkenden Bremse, eingeschaltet, bevorzugt als von der Verschwenkwinkelstellung der rechten bzw. linken Mäheinheit abhängig gesteuerte elektromagnetische Kupplung ausgebildet. Eine solche Kupplung/Bremse ist dabei vorzugsweise im Bereich der Ausgänge des Verteilergetriebes oder der Eingänge der Sichelmähblattantriebe vorgesehen. Vor allem für die seitlichen, hochschwenkbaren Mäheinheiten ist eine solche Kupplung und Bremse zur Vermeidung von Verletzungsgefahren angezeigt, es kann aber auch die mittlere Mäheinheit mit einer solchen Kupplung und Bremse versehen werden, die bei Anheben des Gerätes durch die Drei-Punkt-Aufnahmeausbildung des Traktors aktiviert wird.

Die Dreimäheinheiten sind vorzugsweise vom Grundaufbau her gleich ausgebildet, lediglich im Rahmen der Anschlüsse über die Lenkereinrichtungen zum Zentralrahmen und die Ausrichtung der Sichelmähblattantriebe sind Anpassungen erforderlich. Die mittlere Mäheinheit kann je nach Kurvigkeit der Mähbahn breiter als die seitlichen Mäheinheiten ausgebildet sein. Die Mäheinheiten bzw. Sichelmähblätter und Gehäuse können für Normalschnitt oder für Mulchmähen ausgebildet sein.

Bevorzugte Ausführungen der Erfindung ergeben sich aus den Unteransprüchen, insbesondere unter Bezug auf die in den Figuren wiedergegebenen Ausführungsbeispiele, deren nachfolgende Beschreibung die Erfindung näher erläutert. Es zeigen:
- Figur 1.: eine schematisierte Draufsicht auf ein Mähgerät im Frontanbau an einen Traktor;
- Figur 2.: eine schematisierte Seitenansicht in Blickrichtung von der Frontseite des Traktors aus gesehen;
- Figur 3.: eine schematisierte Draufsicht auf ein Mähgerät im Heckanbau an einen Traktor.

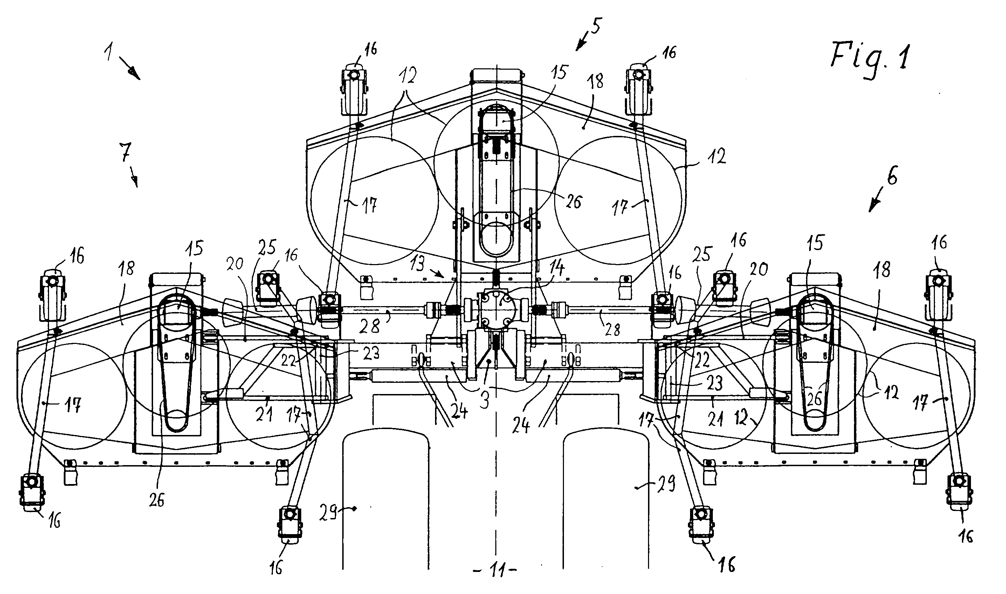

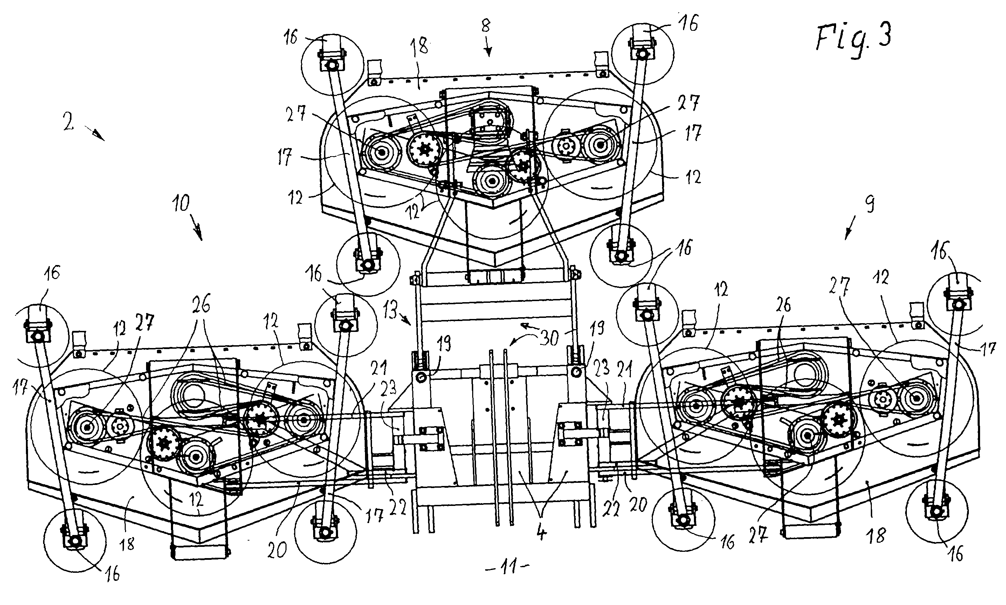

Figur 1 zeigt ein Großflächen-Mähgerät 1 im Frontanbau an einen nur andeutungsweise wiedergegebenen Traktor 11, an dessen ebenfalls nur angedeuteter Drei-Punkt-Aufnahmeausbildung ein Zentralrahmen 3 angeschlossen ist. An den Zentralrahmen 3 sind in dessen dem Traktor abgewandten Rahmenbereich 13 über eine Lenkeranordnung eine mittlere Mäheinheit 5 und über seitlich abragende Lenkereinrichtungen eine rechte Mäheinheit 6 und eine linke Mäheinheit 7 angeschlossen, derart, daß bei Absenken des Zentralrahmens 3 mittels der Drei-Punkt-Aufnahmeausbildung des Traktors die Mäheinheiten 5, 6 und 7 insoweit eigenbeweglich an dem Boden über jeweils vier Laufräder 16 abgestützt sind, die paarweise an Trägern 17 angeordnet sind, die die Mäheinheitgehäuse 18 tragen. Innerhalb der Gehäuses sind in an sich bekannter Weise jeweils drei Sichelmähblätter 12 um Rotationsachsen 27 drehbar gelagert, die über ein Keilriemengetriebe 26 - Figur 3 - ebenfalls grundsätzlich bekannter Ausbildung an Sichelmähblattantriebe 15 getrieblich angeschlossen sind. Die Sichelmähblattantriebe 15 aller drei Mäheinheiten 5, 6 und 7 sind jeweils mit ihrem Eingang über eine Gelenkwellenverbindung mit einem der drei Ausgänge eines Verteilergetriebes 14 üblicher Bauart getrieblich verbunden, das an dem Zentralrahmen 3 angeordnet ist und dessen Eingang mit dem nicht dargestellten Zapfwellenantrieb an der Frontseite des Traktors 11 über eine Gelenkwelle - nur angedeutet - in Verbindung steht. Zwischen dem Sichelmähblattantrieb 15 der mittleren Mäheinheit 5 und dem zugeordneten Ausgang des Verteilergetriebes 14 ist eine durchgehende Gelenkwelle angeordnet, während die Sichelmähblattantriebe 15 der seitlichen Mäheinheiten 6 und 7 zunächst über eine Gelenkwelle 25 und im Antriebszug folgend eine Verbindungswelle 28 an die seitlichen Ausgänge des Verteilergetriebes angeschlossen sind. Auf diese Weise wird der Verschwenkmöglichkeit der seitlichen Mäheinheiten 6 und 7 Rechnung getragen, wie dies nachstehend erläutert wird.

Die Lenkereinrichtungen zwischen den seitlichen Mäheinheiten 6 und 7 und dem Zentralrahmen 3 weisen jeweils zwei parallel beabstandet zueinander verlaufende Lenkerarme 20 und 21 auf, deren einer - 21 - mit einem gabelförmig derart abgespreizten Arm versehen ist, daß dessen freies Lenkerende 22 in den Nachbarbereich des in gleiche Richtung abstrebenden Endes des anderen Hebels 20 ragt. Alle drei in gleiche Richtung abragende Hebelenden sind um eine Schwenkachse 23 drehbar gelagert, die im Seitenbereich des Zentralrahmens 3 gehalten ist. Anderen Endes sind die Lenkerarme 20 und 21 an dem Gehäuse der zugehörigen Mäheinheit 6 bzw. 7 angelenkt. Im Bereich der Lagerung an der Schwenkachse 23 sind die Lenkerarme entsprechend spielbehaftet oder über Kugelgelenklager derart angelenkt, daß sie um die Schwenkachse 23 herum in einem gewissen Winkelbereich pendeln können. Aufgrund dieser Lagerung und die eigenbewegliche Anordnung beider Lenkerarme 20 und 21 kann sich die angeschlossene Mäheinheit der Abstützung über ihre Laufräder 16 an der zu mähenden Fläche gegenüber dem Zentralrahmen 3 insoweit frei bewegen, während die Lenkerarme 20 und 21 andererseits eine starre Führung der seitlichen Mäheinheiten 6 bzw. 7 gegenüber dem Zentralrahmen 3 in Fahrtrichtung und damit Mährichtung bilden.

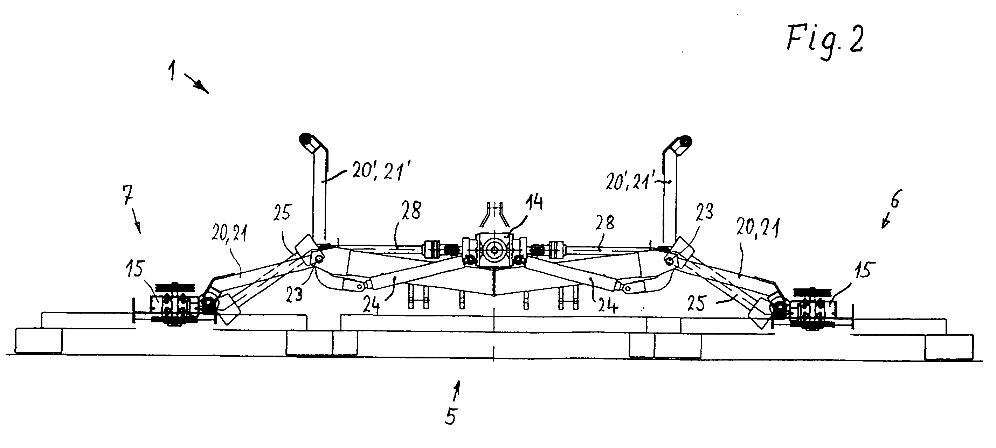

Wie aus Figur 2 erkennbar ist, sind den Lenkereinrichtungen 20, 21 jeweils Hebelausbildungen zugeordnet, zwischen denen und dem Zentralrahmen 3 Kolben-Zylinder-Einrichtungen 24 angeordnet sind. Die Hebel sind entweder mit der jeweiligen Lenkereinrichtung 20, 21 starr verbunden oder aber greifen bei Hubbewegung der Zylinder-Einrichtungen 24 derart an diesen an, daß die Lenkereinrichtungen 20, 21 und damit die angeschlossenen Mäheinheiten 6 bzw. 7 angehoben werden können, und zwar um einen Winkel Größe 90°, so daß die Lenkereinrichtungen in die aus Figur 2 ersichtliche Hochverschwenklage 20' , 21' gelangen womit die angeschlossenen Mäheinheiten praktisch in die Größenordnung der seitlichen Begrenzung des Traktors verschwenkt sind. Diese Verschwenkbewegung kann wahlweise für die rechte Mäheinheit 6 oder die linke Mäheinheit 7 - Hindernisumfahrung - oder aber gleichzeitig für beide Mäheinheiten 6 und 7 durchgeführt werden - Transportlage -. Die geteilte Ausbildung der Antriebe zwischen dem Verteilergetriebe 14 und den Sichelmähblattantrieben 15 der seitlichen Mäheinheiten 6 bzw. 7 in eine Gelenkwelle 25 und eine Verbindungswelle 28 ermöglichen diesen Schwenkvorgang ohne Abbau der getrieblichen Verbindung zwischen Mäheinheit und Zentralrahmen. In diesem Getriebezug ist eine nicht dargestellte Kupplung und Bremse eingebaut, die bei Hochschwenken der Mäheinheit die getriebliche Verbindung selbsttätig unterbricht und die Auslaufbewegung der Sichelmähblätter 12 abbremst.

Wie Figur 1 erkennen läßt, befinden sich die seitlichen Mäheinheiten 6 und 7 zum Teil in den Außenseitenbereichen der Vorderräder 29 des Traktors 11, wodurch nicht nur der gesamte Frontanbau des Gerätes an den Traktor sehr raumsparend und damit wendig wird, sondern auch sichergestellt ist, daß bei Kurvenfahrten ungemähte Flächenbereiche vermieden sind.

In Figur 3 ist ein Großflächen-Mähgerät 2 im Heckanbau an den nicht dargestellten Traktor 11 gezeigt, welches wiederum einen Zentralrahmen 4 und drei an diesen angeordnete Mäheinheiten 8 als mittlere, 9 als rechte und 10 als linke umfaßt. Der Zentralrahmen 4 ist in diesem Falle über nicht dargestellte, um Schwenklagerungen 19 senkrecht zum Boden drehbare Stützräder in der Betriebslage bodenseitig und mittels der auf Schwimmen gesteuerten Drei-Punkt-Aufnahmeausbildung (nicht gezeigt) des Traktors 11 gehalten. In den Seitenbereichen des Tragrahmens 4 sind in vergleichbarer Weise wie in Zusammenhang mit den Figuren 1 und 2 geschildert über Lenkereinrichtungen 20, 21 die seitlichen Mäheinheiten 9 und 10 gehalten, angetrieben und verschwenkbar, während die mittlere nunmehr in Fahrtrichtung nach hinten ragende Mäheinheit 8 an dem Zentralrahmen über eine an diesem ausgebildete Drei-Punkt-Anlenkausbildung 30 gehalten ist. Diese erlaubt nach Absenken in die Arbeitslage eine freibewegliche Abstützung der Baueinheit 5 am Boden und ermöglicht andererseits bei Transportlage oder dergleichen ein Anheben mit dem Zentralrahmen 4 der über die Drei-Punkt-Aufnahmeausbildung des Traktors 11 angehoben wird. Zu diesem Zwecke sind nicht dargestellte kettenförmige Verbindungen zwischen dem oberen Drei-Punkt-Bereich und dem Gehäuse 18 der mittleren Mäheinheit 8 vorgesehen. Der getriebliche Anschluß ist in vergleichbarer Weise wie im Beispiel nach den Figuren 1 und 2 geschildert getroffen, worauf im einzelnen Bezug genommen wird.

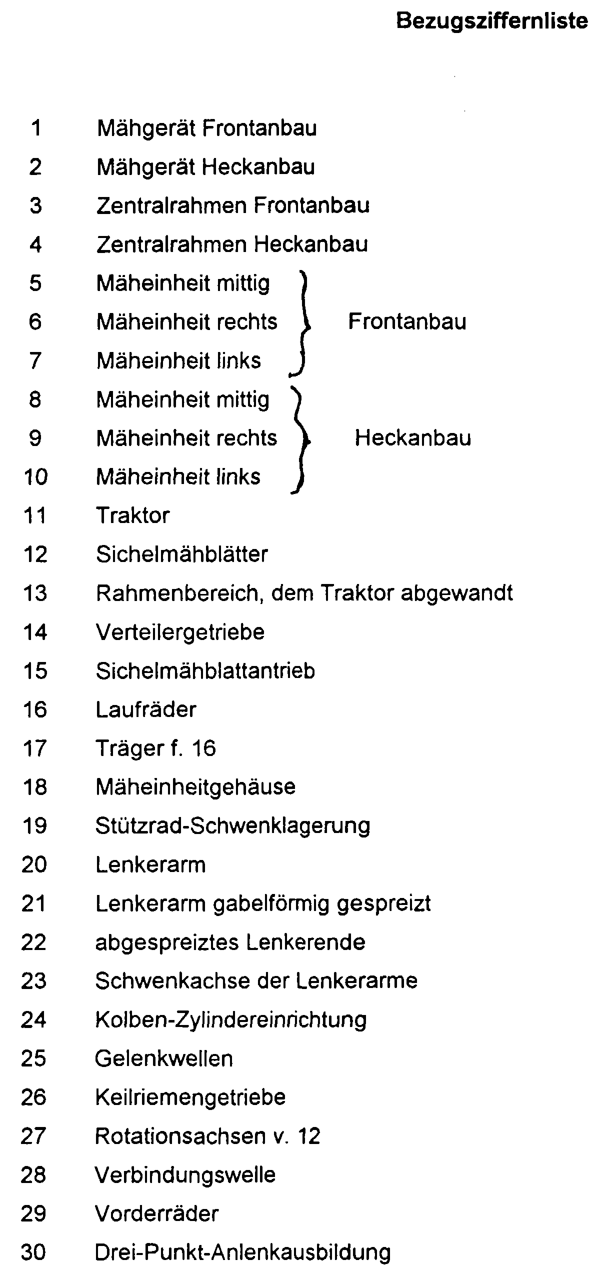

## Patentansprüche

1. Großflächen-Mähgerät (1; 2) für den Anbau an einen Traktor (11) mit mehreren Sichelmähblättern (12), die um etwa senkrecht zur zu mähenden Fläche gerichtete Achsen rotierend gemeinsam von dem Traktor aus antreibbar sind,
**gekennzeichnet**
durch einen Zentralrahmen (3;4), der an eine Aufnahmeausbildung des Traktors (11) anbaubar ist und an dessen dem Traktor abgewandter Rahmenbereich (13) eine mittlere Mäheinheit (5; 8) und an dessen seitlichen Rahmenbereichen eine rechte und eine linke Mäheinheit (6, 7; 9, 10) angeschlossen sind, so daß deren Mähbetriebsausrichtungen parallel zueinander und in Fahrtrichtung des Traktors verlaufen, wobei der Zentralrahmen (3; 4) ein Verteilergetriebe (14) mit einem Eingang und drei Ausgängen aufweist, dessen Eingang an eine Zapfwelle des Traktors getrieblich angeschlossen ist und von dessen Ausgängen je einer mit dem Sichelmähblattantrieb (15) eines der drei Mäheinheiten (5, 6, 7; 8, 9, 10) getrieblich in Verbindung steht.

2. Mähgerät nach Anspruch 1,
**dadurch gekennzeichnet,**
daß die drei Mäheinheiten (5, 6, 7; 8, 9, 10) höhenbeweglich an dem Zentralrahmen (3; 4) gehalten und über Laufräder (16), vorzugsweise um senkrecht zur Schnittebene der Sichelmähblätter (12) verschwenkbare Nachlaufräder, an der zu mähenden Fläche abgestützt sind, insbesondere je Mäheinheit vier Laufräder, die bevorzugt paarweise an spitzwinkelig zur Fahrtrichtung verlaufenden Trägern (17) des Mäheinheitgehäuses (18) gehalten sind.

3. Mähgerät nach Anspruch 2,
**dadurch gekennzeichnet,**
daß die rechte und die linke Mäheinheit (6, 7; 9, 10) jeweils über eine Lenkereinrichtung mit dem Zentralrahmen (3; 4) höhenverstellbar verbunden sind, insbesondere in Ausbildung zweier parallelverlaufend beabstandeter, jeweils eigenbewegliche gelagerter Lenkerarme (20, 21), deren einer (21) vorzugsweise derart gabelförmig abgespreizt ausgebildet ist, daß das abgespreizte Lenkerende (22) mit dem des anderen Lenkerarmes (20) diesem benachbart an derselben Schwenkachse (23), insbesondere der dem Tragrahmen (3; 4) zugeordneten Schwenkachse, angelenkt ist, wobei die Lenkerlager bevorzugt zumindest dieser Schwenkachse (23) aus deren statischem Verlauf pendelnd abweichend - entsprechend spielbehaftet oder als Kugelgelenklager - ausgebildet sind.

4. Mähgerät nach einem der Ansprüche 1 bis 3,
**dadurch gekennzeichnet,**
daß der Zentralrahmen (3; 4) an eine höhenversetzbare Drei-Punkt-Aufnahmeausbildung des Traktors (11) angeschlossen ist und daß die rechte und die linke Mäheinheit (6, 7; 9, 10) jeweils - vorzugsweise mittels je einer Kolben-Zylindereinrichtung (24) - gegenüber dem Zentralrahmen (3; 4) zwischen der Betriebslage und einer dieser gegenüber nach oben um etwa 90° versetzten Transportlage gemeinsam oder getrennt wahlweise verschwenkbar sind.

5. Mähgerät nach einem der Ansprüche 1 bis 4,
**dadurch gekennzeichnet,**
daß das Verteilergetriebe (14) des Zentralrahmens (3; 4) sowohl ankommend mit einer Zapfwelle des Traktors (11) als auch abgehend mit den Sichelmähblattantrieben (15) der Mäheinheiten (5, 6, 7; 8, 9, 10) über Gelenkwellen (25) in Verbindung steht und daß jeder der Sichelmähblattantriebe (15) mit den - vorzugsweise drei - Sichelmähblättern (12) der jeweilig zugehörigen Mäheinheit (5, 6, 7; 8, 9, 10) über ein Keilriemengetriebe (26) verbunden ist.

6. Mähgerät nach einem der Ansprüche 1 bis 5 in Ausbildung als Frontanbaugerät,
**dadurch gekennzeichnet,**
daß der Zentralrahmen (3) an die Drei-Punkt-Aufnahmeausbildung im Frontbereich des Traktors (11) anschließbar und von diesem zwischen einer Betriebslage und einer Transportlage höhenversetzbar getragen ist und daß die Sichelmähblattantriebe (15) in Mährichtung, d.h. Vorwärtsfahrtrichtung des Traktors (11), jeweils im Frontbereich der zugehörigen Mäheinheiten (5, 6, 7) vor den Rotationsachsen (27) der Sichelmähblätter (12), vorzugsweise vor den peripher äußeren Umlaufbahnen der seitlich angeordneten Sichelmähblätter (12), angeordnet sind, wobei die Gelenkwellenverbindungen zwischen dem Verteilergetriebe (14) und den Sichelmähblattantrieben (15) der rechten und der linken Mäheinheit (6, 7) jeweils in Aufeinanderfolge aus einer von dem Verteilergetriebe (14) ausgehenden Verbindungswelle (28) und einer von dem Zentralrahmen (3) zu den Sichelmähblattantrieben (15) führenden Gelenkwelle (25) bestehen.

7. Mähgerät nach Anspruch 6,
**dadurch gekennzeichnet,**
daß die rechte und die linke Mäheinheit (6, 7) in die Bereiche seitlich der Vorderräder (29) des Traktors (11) hineinragend angeordnet sind und vorzugsweise die mittlere Mäheinheit (5) hinsichtlich ihres Mähbereiches senkrecht zur Mäh- bzw. Vorwärtsfahrtrichtung breiter ist, d.h. Sichelmähblätter mit größerem Durchmesser aufweist, als die rechte und die linke Mäheinheit (6, 7).

8. Mähgerät nach einem der Ansprüche 1 bis 5 in Ausbildung als Heckanbaugerät,
**dadurch gekennzeichnet,**
daß der Zentralrahmen (4) an die Drei-Punkt-Aufnahmeausbildung im Heckbereich des Traktors (11) anschließbar und von diesem zwischen einer Transportlage getragen und in eine Betriebslage absetzbar ist, in welch letzterer der Zentralrahmen (4) mittels wenigstens einem, vorzugsweise zwei, um eine senkrechte Schwenklagerung (19) drehbaren Nachlaufstützrad an der zu mähenden Fläche abgestützt ist, und daß der Zentralrahmen (4) in seinem dem Traktor (11) abgewandten Rahmenbereich (13) eine Drei-Punkt-Anlenkausbildung (30) aufweist, an der die mittlere Mäheinheit (8) senkrecht zur zu mähenden Fläche gelenkig versetzbar angeschlossen und, vorzugsweise über nur zugbelastbare Verbindungen, in die Transportlage anhebbar angeschlossen ist.

9. Mähgerät nach einem der Ansprüche 1 bis 8,
**dadurch gekennzeichnet,**
daß in den Antriebszug zumindest der rechten und linken Mäheinheiten (6, 7; 9, 10) je eine im Überführungsfall von der Betriebs- in die Transportlage trennende Kupplung, insbesondere in Folgeschaltung mit einer auf den Sichelmähblattantrieb (15) wirkenden Bremse, eingeschaltet ist, bevorzugt als von der Verschwenkwinkelstellung der rechten bzw. linken Mäheinheit (6, 7; 9, 10) abhängig gesteuerte elektromagnetische Kupplung ausgebildet.

10. Mähgerät nach einem der Ansprüche 1 bis 9,
**dadurch gekennzeichnet,**
daß die Mäheinheiten (5, 6, 7; 8, 9, 10) einen übereinstimmenden Grundaufbau aufweisen.
